# EUROPEAN PATENT APPLICATION

(11) **EP 0 523 841 A1**
(43) Date of publication of application: **20.01.1993**
(21) Application number: 92305297.1
(22) Date of filing: 10.06.1992
(51) Int. Cl.: G03C 3/00, C08L 23/04

(54) **Film container**

(30) Priority: 15.07.1991 JP 174178/91
(71) Applicant: KONICA CORPORATION, Tokyo 160 (JP)
(72) Inventor: Goi, Katsunori, Hino-shi, Tokyo (JP); Watanabe, Manabu, Hino-shi, Tokyo (JP)
(74) Representative: Ben-Nathan, Laurence Albert

(57) **Abstract**

A photographic film container to accommodate a photographic film therein, is made of a resin including a copolymer resin of ethylene and α-olefin not less than 80 wt%, wherein the melt flow rate of said resin is not less than 20 (g / 10 min).

## Description

### BACKGROUND OF THE INVENTION]

The present invention relates to a container for photographic film use in which a color negative film or color reversal film is accommodated.

Hitherto, various techniques concerning containers for photographic film use have been proposed. Examples of photographic film containers are disclosed in the official gazettes of Japanese Patent Application Open to Public Inspection Nos. 163045/1985, 73947/1986, 7047/1987, 210457/1987, 291639/1987, 291640/1987, 14143/1988, 21646/1988, 508130/1988, 113453/1988, 121047/1988, 193142/1988, 193143/1988, 204252/1988, 9445/1989, 183247/1990, 190884/1990, 193140/1990, 221957/1990 and 247640/1990, and also in the official gazettes of Japanese Utility Model Open to Public Inspection Nos. 163451/1985, 182543/1986 and 57256/1987. These film containers are made of high density polyethylene or polypropylene.

When the aforementioned materials are used for film containers, uneven thickness of film containers tends to occur. Accordingly, the ratio of occurrence of defectives caused by uneven thickness is relatively high, so that productivity is lowered and the costs are increased.

### SUMMARY OF THE INVENTION

It is a primary object of the present invention to provide photographic film containers characterized in that: the ratio of occurrence of defectives is very low in the production process of the photographic film containers; productivity is high; and costs are low.

The object of the present invention can be accomplished by providing film containers made of a resin which contains not less than 80 wt% of copolymer resin of ethylene and α-olefin, and the melt flow rate of which is not less than 20 (g/10min).

Copolymer resin of ethylene and α-olefin may be made by either of the random, block and graft polymerization methods. It is preferable to adopt the random polymerization method. The polymerisation ratio of ethylene and α-olefin is preferably in the range of 85 : 15 through 95 : 5.

The ratio of polymerization of ethylene and α-olefin is greatly related to the melt-flow-rate of a resin. When α-olefin Is copolymerized with the simple substance of ethylene in a resin, α-olefin becomes an inhibiting factor in the resin when it flows. Accordingly, when the polymerization ratio of ethylene and α-olefin is increased, the fluidity is lowered.

Preferably, the melt-flow-rate is maintained to be not less than 20 (g/10min), and when the polymerization ratio of α-olefin and ethylene is in a range of 90 : 10 to 94.5 : 5.5, the melt-flow-rate can be maintained to be not less than 20 (g/10min).

In the case of high density polyethylene, a chin of ethylene polymer is long, and from a middle portion of the chain are separated a branch of α-olefin to form a copolymer resin. In this constitution, if the number of the branch increases, the branches tend to interfere the fluidity of the resin.

For example, butene-1, hexene-1, 4-methylpentene-1 and octene-1 are used for α-olefin composing the copolymer resin.

The melt-flow-rate of a resin is affected by the type of α-olefin. Preferably, butene-1 or hexene-1 is selected for α-olefin. Due to the foregoing, the melt-flow-rate can be ensured to be not less than 20 (g/10min).

In the case where high density polyethylene described above is used as a resin to structure film containers, the content of high density polyethylene in the resin may be 100%. However, not more than 20% of low density polyethylene resin may be used in the resin.

When film containers are formed from resin containing high density polyethylene resin described above, the ratio of occurrence of defectives caused by uneven thickness is very low, and further, the film container body is appropriately engaged with a cap. Accordingly, film containers having high anti-moisture property can be made at high productivity.

When film containers are formed from the aforementioned resins, various kinds of antistatic agents are used such as conductive substances and surface active agents; fatty acid compounds such as fatty acid, fatty acid metallic salt and fatty acid amide; various kinds of lubricants such as higher alcohol, fatty acid ester and wax; and anti-oxidants. In order to make the surface of a film container less susceptible to damage, and in order to make the surface more slippery, to improve the mold releasing property, to prevent the generation of static electricity, and to prevent blocking of containers, the injection molding property is improved, and especially the fluidity of resin is improved so that a thin film is formed on the surface of the film container. In order to attain the aforementioned objects, fatty acid amide lubricant such as oleic acid amide lubricant, erucic acid amide lubricant, stearic acid amide lubricant, stearyl erucic acid amide lubricant, bis fatty acid amide lubricant and behenic acid amide lubricant, is added. In the case of oleic acid amide lubricant having high lubrication effect, the added amount may be 0.01 - 1.0 wt%.

In order to increase the crystallization speed and improve physical properties, various organic and inorganic nucleus forming agents may be added. When a nucleus forming agent is added, the rigidity of the resin structure is improved, and the crystallizing temperature is raised. Accordingly, even when cooling time is shortened, the film containers are less susceptible to shrinkage and buckling. Therefore, even when a large number of film containers are put into a hopper immediately after molding, the containers are less susceptible to deformation. Further, it is possible to improve the abrasion resistance, so that a remarkable effect can be provided when the containers are produced by means of high speed processing or conveyed by pneumatic means. It is possible to use various organic and inorganic nucleus forming agents. A typical example of a usable nucleus forming agent which does not affect photographic films is 1·3, 2·4, dibenzylidene sorbitol in which 1 mol of sorbitol is bonded with 2 moles of benzaldehyde. In this case, a benzene ring may be provided with substituents of methyl, ethyl, butyl, lauryl and stearyl. Further, the following compounds, the surfaces of which are coated with pure higher fatty acid, may be used: alkyl substituted highly pure dibenzylidene sorbitol; 1·3, 2·4 di(methylbenzylidene) solbitol in which 2 moles of tri-aldehyde and 1 mol of solbitol are reacted in the manner of condensation; 1·3, 2·4 bis(methylbenzylidene) solbitol; 1·3, 2·4 bis(ethylbenzylidene) solbitol; and 1·3, 2·4 dibenzylidene sorbitol. The adding amount of the nucleus forming agent is preferably not more than 1.0 wt%. The nucleus forming agent can be mixed with the resins of the present invention by the drive-blend method, compound method and master batch method. In this case, a small amount of dispersing agent or wetting agent may be added. Examples of usable dispersing agents are carboxylic acid anhydride and higher fatty acid. Examples of usable wetting agents are plasticizers such as DOP and DHP.

In order to improve the anti-charging property of film containers, various surface active agents may be added. Examples of usable surface active agents are: polyethylene glycol fatty acid ester, polyoxyethylene sorbitan fatty acid ester, polyoxyethylene aliphatic alcohol ether, polyoxyethylene alkylphenyl ether, polyoxyethylene glycerin fatty acid ester, polyoxyethylene aliphaticamine, sorbitan monofatty acid ester, fatty acid pentaerythritate, ethyleneoxide addition product of aliphetic alcohol, ethleneoxide addition product of fatty acid amino or fatty acid amide, ethyleneoxide addition product of alkylphenol, ethyleneoxide addition product of alkylnaphthol, ethyleneoxide addition product of fatty acid ester of polyhydric alcohol, nonion surface active agents described in the official gazette of Japanese Patent Publication No. 26697/1988, ricinoleic acid sulfateester sodasalt, various kinds of fatty acid metallic slat, ricinoleic acid ester sulfate ester sodasalt, sulfate oleic acid ethylaniline, sulfate ester salt of olefin, oleylalcohol sulfate ester sodasalt, alkyl sulfate ester salt, fattyacidethyl sulfonate, alkylsulfonate, alkylnaphthalene sulphonate, alkylbenzensulfonate, succinic acid ester sulfonate, surface active agents of anion such as phosphoric ester salt, primary amine salt, tertiary amine salt, quarternary ammonium slat, surface active agents of positive ion such as pyridine derivatives, carboxylic acid derivatives, imidazoline derivatives, amphoteric surface active agents such as betaine derivatives.

An antioxidants such as a phenol type of antioxidant, a ketonamine condensed type of antioxidant, an allylamine type of antioxidant, an imidazole type of antioxidant, a phosphite type of antioxidant, a thiourea type of antioxidant, a sulfur type of antioxidant may be added in order to improve the stability of resin, for example, when not more than 1.0% of phenol type of antioxidant may be added.

### BRIEF DESCRIPTION OF THE DRAWINGS

The attached drawing is a sectional view showing a film container body.

### DETAILED DESCRIPTION OF THE PREFERRED EMBODIMENT

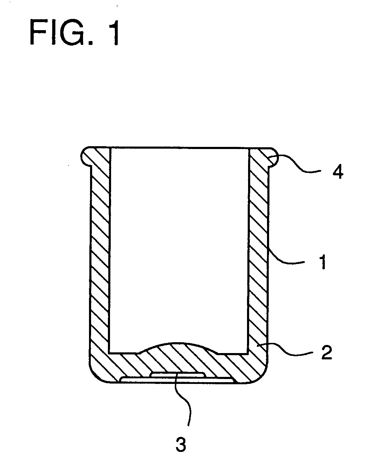

Using the aforementioned resins, a film container 1 shown in Fig. 1 is molded by an injection molding method in which one stage type of metallic mold is used, an injection blow molding method, a vacuum injection molding method in which resin is injected into a metallic mold, and an injection molding method in which a multistage metallic mold such as a stack mold is used. In the attached drawing, numeral 2 is a cylindrical side wall portion, the thickness of which is 0.4 to 1.3 mm, numeral 3 is a bottom portion, the center of which is protruded and the thickness is 1.0 to 1.6 mm, and numeral 4 is a rib which is formed in the outside of the upper end of the side wall portion 2.

A cap of the film container 1 may be made of the same material as the film container body 1 or a different material such as polyethylene resin of low density.

With reference to examples, the film container according to the present invention will be explained as follows.

### EXAMPLES

### [EXAMPLE 1]

In this example, a resin composition (melt flow rate 20 (g/10min)) composed of; 80 wt% of high density polyethylene resin (120J produced by Idemitsu Sekiyu Kagaku Co.) including a copolymer of ethylene and α-olefin (butene-1); and 20 wt% of resin of L-LDPE (GA-802) produced by Sumitomo Kagaku Kogyo Co,.were supplied to an injection molding machine (J-150P) made by Nippon Seikosho so that film containers were molded by means of injection molding under the condition that the melting temperature was 265°C and the injection pressure was 1300 kg/cm². In the manner mentioned above, the film container shown in the attached drawing was made.

### [EXAMPLE 2]

Instead of the resin used in Example 1, a resin composition (melt flow rate 30 (g/10min)) composed of; 87 wt% of high density polyethylene resin (JX-10 produced by Mitsubishi Yuka Co.) including a copolymer of ethylene and α-olefin (butene-1); and 13 wt% of resin of L-LDPE (UJ-990) produced by Mitsubishi Yuka Co,.were supplied to the injection molding machine in the same manner so that the film container shown in the drawing was made.

### [EXAMPLE 3]

Instead of the resin used in Example 1, a resin composition (melt flow rate 40 (g/10min)) composed of; 95 wt% of high density polyethylene resin (J-300 produced by Asahi Kasei Kogyou Co.) including a copolymer of ethylene and α-olefin (butene-1); and 5 wt% of resin of L-LDPE (GA-815) produced by Sumitomo Kagaku Kogyo Co,.were supplied to the injection molding machine in the same manner so that the film container shown in the drawing was made.

### [Comparative Example 1]

Instead of the resin used in Example 1, a resin composition (melt flow rate 5 (g/10min)) composed of; 65 wt% of high density polyethylene resin (210J produced by Idemitsu Sekiyu Kagaku Co.) including a copolymer of ethylene and α-olefin (butene-1); and 35 wt% of resin of L-LDPE (O464G) produced by Idemitsu Sekiyu Kagaku Co,.were supplied to the injection molding machine in the same manner so that the film container shown in the drawing was made.

### [Comparative Example 2]

Instead of the resin used in Example 1, a resin composition (melt flow rate 15 (g/10min)) composed of; 90 wt% of high density polyethylene resin (J-320 produced by Asahi Kasei Kogyo Co.) including a copolymer of ethylene and α-olefin (butene-1); and 10 wt% of resin of L-LDPE (UJ-370) produced by Mitsubishi Yuka Co,.were supplied to the injection molding machine in the same manner so that the film container shown in the drawing was made.

### [Comparative Example 3]

Instead of the resin used in Example 1, a resin composition (melt flow rate 15 (g/10min)) composed of; 70 wt% of high density polyethylene resin (110J produced by Idemitsu Sekiyu Kagaku Co.) including a copolymer of ethylene and α-olefin (butene-1); and 30 wt% of resin of L-LDPE (CS5007) produced by Sumitomo Kagaku Kogyo Co,.were supplied to the injection molding machine in the same manner so that the film container shown in the drawing was made.

### [Comparative Example 4]

Instead of the resin used in Example 1, a resin composition (melt flow rate 25 (g/10min)) composed of; 75 wt% of high density polyethylene resin (J-310 of Asahi Kasei Kogyo Co.) including a copolymer of ethylene and α-olefin (butene-1); and 25 wt% of resin of L-LDPE (LM8825) produced by Asahi Kasei Kogyo Co, were supplied to the injection molding machine in the same manner so that the film container shown in the drawing was made.

### [Characteristics]

In each of the aforementioned examples, 10000 film containers were made, and the number of defectives was investigated. The results are shown in Table-1.

**TABLE-1**

| | Number of occurrence of defectives |
|---|---|
| Example 1 | 2 |
| Example 2 | 1 |
| Example 3 | 1 |
| Comparative Example 1 | 139 |
| Comparative Example 2 | 129 |
| Comparative Example 3 | 79 |
| Comparative Example 4 | 58 |

According to the results of the test, the ratio of occurrence of defectives such as uneven thickness was very low in the case of the film containers of the present invention, so that the productivity was high. On the other hand, in the case of the film containers of the comparative examples, the ratio of occurrence of defectives was high, so that the productivity was low.

Caps were made of low density polyethylene (M-6545 produced by Asahi Kasei, the melt flow rate of which was 45(g/10min) and elastic modulus was 950 kg/cm²). The obtained caps were set on the film containers of the present invention in order to check wether they were appropriately engaged with the film containers or not. The results of the test as shown in Table-2 were excellent, and water resistance property was good.

**TABLE-2**

| No. | | Water content (mg) |
|---|---|---|
| Example 1 | → | 2.4 |
| Example 2 | → | 2.7 |
| Example 3 | → | 2.1 |
| Comparative Example 1 | → | 5.6 |
| Comparative Example 2 | → | 5.9 |
| Comparative Example 3 | → | 6.3 |

An amount of water content was measured by the following manner.
1. Silica gel of 5 g was put in each of the above container.
2. Each of the container was fit with the above cap and was left for 24 hrs under the condition that temperature 40°C and humidity 90%.
3. The weight of the silica gel was measured to obtain the amount of water content.

With regard to water content, it is noted that the water content more than 5 mg may adversely influence a film stored in the container.

## Claims

1. A photographic film container, comprising
a container to accommodate said photographic film therein being made of a resin including a copolymer resin of ethylene and α-olefin not less than 80 wt%, wherein the melt flow rate of said resin is not less than 20 (g / 10 min).

2. The container of claim 1, wherein the polymerization ratio of ethylene and α-olefin is within the range of 85 : 15 through 95 : 5.

3. The container of claim 2, wherein the polymerization ratio of ethylene and α-olefin is within the range of 90 : 10 through 94.5 : 5.5.

4. The container of claim 1, wherein said α-olefine is butene-1.

5. The container of claim 1, wherein said α-olefine is hexene-1.

6. The container of claim 1, wherein said container is made by injection molding.
